# EUROPEAN PATENT SPECIFICATION

(11) **EP 2 600 735 B1**
(45) Date of publication and mention of the grant of the patent: **06.04.2016**
(21) Application number: 11746073.3
(22) Date of filing: 29.07.2011
(51) Int. Cl.: A23L 33/21

(54) **CARBOHYDRATE COMPOSITIONS**
KOHLENHYDRAT-ZUSAMMENSETZUNGEN
COMPOSITIONS GLUCIDIQUES

(30) Priority: 05.08.2010 US 370935 P
(43) Date of publication of application: 12.06.2013
(60) Divisional application: 16156595.7
(73) Proprietor: Tate & Lyle Ingredients Americas LLC, Hoffmann Estates IL 60192 (US)
(72) Inventor: HOFFMAN, Andrew, J., West Point IN 47992 (US); EVANS, Annette, St. Charles IL 60174 (US); BUTLER, Susan, E., Decatur IL 62526 (US)
(74) Representative: Nieuwenhuys, William Francis
(86) International application number: PCT/US2011/045830
(87) International publication number: WO 2012/018679

(56) References cited:
- EP-A1- 1 340 431
- WO-A2-2009/151263
- US-A1- 2007 172 931
- US-A1- 2008 038 432

## Description

### FIELD OF THE INVENTION

The invention pertains to low sugar, fiber-containing carbohydrate compositions which may be formulated to provide syrups capable of being substituted for traditional corn syrups and high fructose corn syrups in food products.

### DISCUSSION OF THE RELATED ART

For food labeling purposes, mono- and disaccharides are classified as "sugars." Consumer interest in "low sugar" foods has grown in recent years. Sugars such as sucrose, glucose and fructose in the form of syrups (especially corn syrups) are widely used in foods not only to impart sweetness, but also to provide bulking properties. Typically, corn syrups currently offered commercially have a sugar content ranging from 13 to 99%. It has proven difficult to reduce sugar levels in foods without significantly changing important product attributes such as taste, mouthfeel and the like. Although alternative ingredients such as polyols and high intensity sweeteners can be used to provide the sweetness of sugar, such ingredients have certain disadvantages that make them unsatisfactory as full replacements for sugar. For example, high intensity sweeteners do not provide bulking properties. While polyols can impart bulk to food, they can give rise to undesirable gastrointestinal effects. Thus, there exists a need for improved low sugar food ingredients that avoid such disadvantages.

The carbohydrates present in conventional corn syrups and other sweeteners currently used extensively in food products are readily digestible in the human stomach and small intestine. They generally contain little or no dietary fiber, which, in contrast to the aforementioned carbohydrates, is generally not digested in the stomach or small intestine, but is potentially fermentable by microorganisms in the large intestine. There is an interest in developing ingredients that are suitable for use in food products and that are either non-digestible or only digestible to a limited extent, in order to enhance the dietary fiber content or reduce the caloric content of the food. Such modifications are believed to provide certain health benefits. However, many of the dietary fiber food ingredients developed to date are not completely satisfactory replacements for conventional corn syrups and other sweeteners, as they are not capable of imparting similar colligative properties to the food products in which they are incorporated. Thus, there is also a need for improved fiber-containing products that avoid such disadvantages.

US2007/0172931 A1 relates to a process for preparing saccharide oligomers using an aqueous feed composition that comprises at least one monosaccharide or linear saccharide oligomer, and has a solids concentration of at least about 70% by weight. Specifically, the feed composition is heated to a temperature of at least about 40 °C, and is contacted with at least one catalyst that accelerates the rate of cleavage or formation of glucosyl bonds for a time sufficient to cause formation of non-linear saccharide oligomers. A product composition is also disclosed that contains a higher concentration of non-linear saccharide oligomers than linear saccharide oligomers.

### BRIEF SUMMARY OF THE INVENTION

The present invention provides a carbohydrate composition comprising linear and non-linear saccharide oligomers, wherein:
a) the composition has a higher weight concentration of non-linear saccharide oligomers than linear saccharide oligomers;
b) at least about 85 % by weight of the non-linear saccharide oligomers have a degree of polymerization of at least 3;
c) the composition contains a total of less than about 5% by weight on a dry solids basis of mono- and disaccharides;
d) the composition has a caloric content of from about 1 to about 2.5 kcal/g (in one embodiment, from about 1 to about 2 kcal/g); and
e) the composition has a dietary fiber content of from about 80 to about 95%.

Also disclosed herein, but not an embodiment of the invention is a carbohydrate composition comprising linear and non-linear saccharide oligomers and having a moderately high content of dietary fiber, wherein:
a) the composition has a higher weight concentration of non-linear saccharide oligomers than linear saccharide oligomers;
b) at least about 70 % by weight of the non-linear saccharide oligomers have a degree of polymerization of at least 3;
c) the composition contains a total of less than about 25 % by weight on a dry solids basis of mono- and disaccharides;
d) the composition has a caloric content of from about 1 to about 2.5 kcal/g; and
e) the composition has a dietary fiber content of from about 60 to about 80%.

Another embodiment of the invention provides a carbohydrate composition comprising linear and non-linear saccharide oligomers and having a higher content of dietary fiber, wherein:
a) the composition has a higher weight concentration of non-linear saccharide oligomers than linear saccharide oligomers;
b) at least about 85 % by weight of the non-linear saccharide oligomers have a degree of polymerization of at least 3;
c) the composition contains a total of less than about 5 % by weight on a dry solids basis of mono- and disaccharides;
d) the composition has a caloric content of from about 1 to about 2 kcal/g; and
e) the composition has a dietary fiber content of from about 80 to about 95%.

Also disclosed herein and not an embodiment of the invention is a method of preparing a food product. The method may comprise combining one or more food ingredients with a carbohydrate composition as described above.

Also disclosed herein are food products comprising one or more food ingredients and a carbohydrate composition as described above.

### DETAILED DESCRIPTION OF THE INVENTION

Gastrointestinal enzymes readily recognize and digest carbohydrates in which the dextrose units are linked alpha (1,4) ("linear" linkages). Replacing these linkages with alternative linkages (alpha (1,3), alpha (1,6) ("non-linear" linkages) or beta linkages, for example) greatly reduces the ability of gastrointestinal enzymes to digest the carbohydrate. This will allow the carbohydrates to pass on into the small intestines largely unchanged.

In the context of the present invention, a "linear" saccharide oligomer is a saccharide containing two or more monosaccharide units linked solely through alpha (1,4) linkages. A "non-linear" saccharide oligomer is a saccharide containing two or more linked saccharide units wherein at least one linkage is a linkage other than an alpha (1,4) linkage. Methods for measuring the various types of linkages which may be present in saccharides are well known in the art. For example, High Performance Anion Exchange with Pulsed Amperometric Detection (HPAE-PAD), as described in U.S. Pat. No. 7,608,436 (incorporated herein by reference in its entirety for all purposes), may be utilized.

The carbohydrate compositions of the present invention are characterized by having a weight content of non-linear saccharide oligomers that is higher than the content of linear saccharide oligomers. In certain embodiments, the non-linear saccharide oligomer weight concentration is at least 50% greater, or at least 100% greater, or at least 150% greater than the linear saccharide oligomers concentration. The ratio of non-linear to linear saccharide oligomers may be adjusted as desired by varying the conditions under which the carbohydrate composition is prepared such that the production of dextrose-dextrose linkages that are other than alpha (1,4) linkages (e.g., alpha (1,6) linkages) is favored to a greater or lesser extent.

Such conditions are also controlled so as to provide carbohydrate compositions that have a relatively low content of mono- and disaccharides and a relatively high content of non-linear oligosaccharides having a degree of polymerization of three or more (DP3+). The carbohydrate composition contains a total of less than 5% by weight on a dry solids basis of mono- and disaccharides (DP1 + DP2). Likewise, in various embodiments of the invention, at least 85%, or at least 90% by weight of the non-linear saccharide oligomers present in the carbohydrate composition have a degree of polymerization of at least 3 (DP3+). The (DP1 + DP2) and DP3+ content of the carbohydrate composition may be determined by HPAE-PAD.

The inventive carbohydrate composition has a relatively low caloric content, as compared to conventional sugars and corn syrups. In one embodiment, the caloric content is from about 1 to about 2.5 kcal/g, while in another embodiment the caloric content is from about 1 to about 2 kcal/g. As a result, the carbohydrate compositions of the present invention are useful as ingredients in preparing reduced calorie foods, when used to replace conventional sugars and corn syrups.

Carbohydrate compositions in accordance with the present invention are further characterized by having a relatively high content of dietary fiber. Dietary fiber content can be measured by AOAC method 2001.03. The dietary fiber content is from about 80% to about 95%.

The dextrose equivalence (DE) value of the product can be targeted to match the DE value of commercial corn syrup products, if so desired. For example, products with DE values approximately equal to 26, 35, 43 and 63 would be matches for Staley® 200, Staley® 300, Staley® 1300 and Sweetose® 4300 traditional corn syrups (products of Tate and Lyle), respectively. Generally speaking, a high fiber carbohydrate composition in accordance with the present invention will have a DE less than 15, a moderate fiber carbohydrate composition will have a DE of 15-25, and a low fiber carbohydrate composition will have a DE greater than 25.

As will be explained in more detail below, the carbohydrate compositions of the invention are useful as bulking agents that are low in sugar. In syrup form, they are capable of having an appearance, viscosity, crystallinity, mouthfeel, humectancy and other colligative properties similar to that of conventional corn syrups. As such, they can be substituted for such conventional corn syrups in food products, yet will effectively reduce the amount of sugar in such food products. The carbohydrate compositions thus can be utilized to effectively reduce the caloric content of food products without significantly altering the physical and sensory attributes of such products. At the same time, they also have the desirable attribute of enhancing the dietary fiber content of the food product.

For example, the inventive carbohydrate composition may be synthesized by way of a process that uses an aqueous feed composition comprising at least one monosaccharide or linear saccharide oligomer and having a relatively high solids concentration (e.g., at least about 70% by weight, at least about 80% by weight, or at least about 90% by weight). The feed composition may be heated (e.g., to a temperature of at least about 40° C, or at least about 85° C, or at least about 130° C), and is contacted with at least one catalyst that accelerates the rate of cleavage or formation of glucosyl bonds for a time sufficient to cause formation of non-linear saccharide oligomers. A product composition is produced that contains a higher concentration of non-linear saccharide oligomers than linear saccharide oligomers. In some embodiments of the invention, the concentration of non-linear saccharide oligomers in the product composition is at least twice as high as the concentration of linear saccharide oligomers.

In one example of such a process, the at least one catalyst is an enzyme that accelerates the rate of cleavage or formation of glucosyl bonds. In another example of the process, the at least one catalyst is an acid. In some examples of the process, acid and enzyme can be used in sequence, with the feed composition first being treated with enzyme and subsequently with acid, or vice versa.

In some examples, the aqueous feed composition includes at least one monosaccharide and at least one linear saccharide oligomer, and may contain several of each. In many cases, monosaccharides and oligosaccharides will make up at least about 70% by weight on a dry solids basis of the feed composition. It is generally helpful for the starting material to have as high a concentration of monosaccharides as possible, in order to maximize the yield of the desired oligomers. A high solids concentration tends to drive the equilibrium from hydrolysis toward condensation (reversion), thereby producing higher molecular weight products. Therefore the water content of the starting material is preferably relatively low. For example, in certain examples, the feed composition comprises at least about 75% dry solids by weight. ("Dry solids" is sometimes abbreviated herein as "ds.") In some cases, the feed composition comprises about 75-90% solids by weight, which will generally give the appearance of a viscous syrup or damp powder at room temperature.

Examples of suitable starting materials include, but are not limited to, syrups made by hydrolysis of starch, such as dextrose greens syrup (i.e., recycle stream of mother liquor from dextrose monohydrate crystallization), other dextrose syrups, corn syrup, and solutions of maltodextrin.

The feed composition is contacted with the at least one catalyst for a period of time that can vary. In some cases, the contacting period will be at least about five hours. In some examples, the feed composition is contacted with the at least one catalyst for about 15-100 hours. In other examples, shorter contacting times can be used with higher temperatures, in some cases even less than one hour. For example, the feed composition may be combined with catalyst and passed as a stream through a processing zone which is maintained at an elevated temperature on a continuous basis such that the feed composition/catalyst mixture is heated for only a relatively short period of time before exiting the processing zone (i.e., the residence time of the mixture within the processing zone is brief).

In one example of the process, enzymatic reversion is used to produce the desired content of nonlinear oligosaccharides. The enzyme can be, for example, one that accelerates the rate of cleavage of alpha 1,2; 1,3; 1,4; or 1,6 glucosyl bonds to form dextrose residues. One suitable example is a glucoamylase enzyme composition, such as a commercial enzyme composition that is denominated as a glucoamylase. It should be understood that such a composition can contain some quantity of enzymes other than pure glucoamylase, and it should not be assumed that it is in fact glucoamylase itself that catalyzes the desired production of nonlinear oligosaccharides.

Therefore, the feed composition can be contacted with glucoamylase or any other enzyme that acts on dextrose polymers. The amount of enzyme can suitably be about 0.5-2.5% by volume of the feed composition. In some examples of the process, the feed composition is maintained at about 55-75° C during the contacting with the enzyme, or in some cases about 60-65° C. At this temperature, depending on the water content, the material will become a liquid, or a mixture of liquid and solid. Optionally, the reaction mixture can be mixed or agitated to distribute the enzyme. The reaction mixture is maintained at the desired temperature for the time necessary to achieve the desired degree of reversion to non-linear oligomers. In some examples of the process, the feed composition is contacted with the enzyme for about 20-100 hours prior to inactivation of the enzyme, or in some cases, for about 50-100 hours prior to inactivation. Techniques for inactivating glucoamylase are well known in the field. Alternatively, instead of inactivating the enzyme, it can be separated by membrane filtration and recycled.

The resulting composition has a high concentration of non-linear oligosaccharides. This product composition contains a higher concentration of non-linear saccharide oligomers than linear saccharide oligomers. In some cases, the concentration of non-linear saccharide oligomers in the final composition is at least twice as high as the concentration of linear saccharide oligomers.

The processing conditions should be selected such that the resulting product composition contains only a minor amount (i.e., less than 50 wt % total on a dry solids basis, and usually a much lower concentration such as less than 25 wt % or less than 10 wt % total) of residual mono- and disaccharides. The process can include the additional step of removing at least some of the residual mono- and disaccharides (and optionally other species as well) from the product composition by membrane filtration, chromatographic fractionation, or digestion via fermentation. The separated mono- and disaccharides can be combined with other process streams, for example for production of dextrose or corn syrup. Alternatively, the separated mono- and disaccharides can be recycled into the feed composition.

Another way in which carbohydrate compositions in accordance with the present invention may be made is through a process that involves acid-catalyzed reversion. A variety of acids can be used, such as hydrochloric acid, sulfuric acid, phosphoric acid, or a combination thereof. In some examples of the process, acid is added to the feed composition in an amount sufficient to make the pH of the feed composition no greater than about 4, or in some cases, in an amount sufficient to make the pH of the feed composition about 1.0-2.5, or about 1.5-2.0. In some examples, the solids concentration of the feed composition is at least about 70-90%, the amount of acid added to the feed is about 0.05%-0.25% (w/w) acid solids on syrup dry solids, and the feed composition is maintained at a temperature in excess of about 70° C during at least some portion of the time the feed composition is in contact with the acid. As in the enzyme version of the process, the reaction conditions are maintained for a time sufficient to produce the desired content of non-linear oligomers, while preferably also controlling the level of mono- and disaccharides.

In one particular example, the solids concentration of the feed composition is at least about 90% by weight, and the feed composition is maintained at a temperature of at least about 149° C (300° F) for about 0.1-15 minutes after it is contacted with the acid. The acid used to treat the feed can be a combination of phosphoric acid and hydrochloric acid (at the same concentrations discussed above). In one particular example, the contacting of the feed composition with the acid takes place in a continuous pipe/flow through reactor.

The saccharide distributions resulting from acid treatment are believed to be somewhat different than from enzyme treatment. It is believed that these acid-catalyzed condensation products will be less recognizable by the enzymes in the human gut than enzyme-produced products, and therefore less digestible.

The acid treatment progresses differently than enzyme treatment. Enzymes rapidly hydrolyze linear oligomers and slowly form non-linear oligomers, whereas with acid the reduction in linear oligomers and the increase in non-linear oligomers occur at comparable rates. Dextrose is formed rapidly by enzymatic hydrolysis of oligomers, and consumed slowly as non-linear condensation products are formed, whereas with acid dextrose concentrations increase slowly.

Optionally, enzymatic or acid reversion can be followed by hydrogenation. The hydrogenated product should have lower caloric content than currently available hydrogenated starch hydrolysates. In one embodiment, the hydrogenation can be used to decolorize the product composition without substantially changing its dextrose equivalence (DE).

In one version of the process, enzyme and acid can be used sequentially, in any order. For example, the at least one catalyst used in the first treatment can be enzyme, and the product composition can be subsequently contacted with an acid that accelerates the rate of cleavage or formation of glucosyl bonds. Alternatively, the at least one catalyst used in the first treatment can be acid, and the product composition can be subsequently contacted with an enzyme that accelerates the rate of cleavage or formation of glucosyl bonds.

The product composition produced by the treatment with acid, enzyme, or both, has an increased concentration on a dry solids basis of non-linear saccharide oligomers. In various embodiments of the invention, the concentration of non-linear saccharide oligomers having a degree of polymerization of at least three (DP3+) in the carbohydrate composition is at least about 85%, at least about 90% or at least about 95% by weight on a dry solids basis. In some embodiments, the concentration of non-linear saccharide oligomers in the product composition is at least twice as high as the concentration of linear saccharide oligomers.

The product composition will often contain some quantity (typically less than 5% by weight on a dry solids basis, and often much less) of residual mono- and disaccharides. Optionally, at least some of the residual mono- and disaccharides (and possibly other species) can be separated from the oligomers (for example by membrane filtration, chromatographic separation, or digestion via fermentation) and the mono- and disaccharide stream can be recycled into the process feed. In this way, simple sugar syrups can be converted to high-value food additives.

Although the carbohydrate compositions of the present invention can be used in dry form, they may advantageously also be employed in the form of syrups. Such syrups typically contain an amount of water sufficient to provide a composition that is clear and liquid at room temperature (20 to 25 °C). The viscosity of such a syrup may be varied as desired by adjusting the ratio of water to carbohydrate composition. The desirable viscosity will depend, for example, on the desired end-use for the syrup. Generally speaking, however, the viscosity is selected to facilitate product handling, to permit the syrup to be readily processed into foods, and/or to impart a particular organoleptic or mouthfeel quality. The dry solids content of such syrups may, for example, be from about 60% to about 85%. If the carbohydrate composition is initially obtained in the form of a syrup, it may if so desired be dried to provide "syrup solids" (i.e., the carbohydrate composition in dried form).

The above-described carbohydrate compositions can be used as ingredients in food products, as explained in more detail in other parts of this patent application. Such a carbohydrate composition can provide one or more benefits. For example, it can reduce the caloric content and increase the dietary fiber content of corn syrup, it can serve as a "drop-in" replacement for traditional corn syrup in foods, it can provide appropriate or desired fiber loading in products that conventionally use high levels of corn syrup, and it can provide a more economical approach to fiber supplementation in foods.

A carbohydrate composition in accordance with the invention, in either dried or syrup form for example, can be added to foods as a replacement or supplement for conventional carbohydrates. Specific examples of foods in which the inventive carbohydrate composition can be used include processed foods such as bread, cakes, cookies, crackers, extruded snacks, soups, frozen desserts, fried foods, pasta products, potato products, rice products, corn products, wheat products, dairy products, yogurts, confectioneries, hard candies, nutritional bars, breakfast cereals, and beverages. A carbohydrate composition in accordance with the invention may be combined with one or more other food ingredients to provide a food product. Suitable food ingredients include any of the materials known in the art for inclusion in nutritional compositions, such as water or other aqueous solutions, fats (including oils), sugars, starch (and other polysaccharides, which can be digestible, non-digestible or partially digestible), proteins, binders, thickeners, colorants, flavorants, odorants, acidulants, stabilizers, high intensity sweeteners, vitamins and minerals, among others. A food product containing the inventive carbohydrate composition will have a lower glycemic response, lower glycemic index, and lower glycemic load than a similar food product in which a conventional carbohydrate, such as corn starch, is used. Further, because at least some of the oligosaccharides present in the carbohydrate composition are either only digested to a very limited extent or are not digested at all in the human stomach or small intestine, the caloric content of the food product is reduced. The inventive carbohydrate composition is also a source of soluble dietary fiber.

The carbohydrate compositions of the present invention may be utilized as prebiotics and may also be coupled with a probiotic delivery system (i.e., used in combination with one or more probiotics). By "prebiotic" it is meant a food ingredient that beneficially affects the subject by selectively stimulating the growth and/or activity of one or a limited number of bacteria in the gastro-intestinal tract, particularly the colon, and thus improves the health of the host. By "probiotic" it is meant living microbiological dietary supplements that provide beneficial effects to the subject through their function in the digestive tract.

The inventive carbohydrate composition can be added to food products as a source of soluble fiber. It can increase the fiber content of food products without having a negative impact on flavor, mouthfeel, or texture.

The functionality of the inventive carbohydrate composition is similar to corn syrup and sugar, which makes it suitable for complete or partial replacement of various nutritive sweeteners in food products. For example, the carbohydrate composition can be used for total or partial replacement of sucrose, high fructose corn syrup (HFCS), fructose, dextrose, regular corn syrup, or corn syrup solids in food products. As one particular example, the inventive carbohydrate composition can be used to replace other sweetener solids on a 1:1 basis, up to a complete replacement of the sugar solids. At high sweetener solids replacement levels, the sweetness of the food product could be decreased, but mouthfeel and flavor release would remain substantially the same, while sugar and calorie content would be reduced. Also, the inventive carbohydrate composition could be used as a bulking agent, replacing fat, flour, or other ingredients in a food formula.

Alternatively, the inventive carbohydrate composition can be used in food products in combination with sweeteners such as sucrose, HFCS, or fructose, resulting in no change in overall sweetness of the food product. As another example, the inventive carbohydrate composition can be used in food products in combination with one or more auxiliary sweeteners such as a high intensity sweetener, which allows sweetener replacement with no change in sweetness or mouthfeel of the food product. Suitable high intensity sweeteners include both synthetic and natural substances, such as sucralose, saccharin, aspartame, mogrosides (such as those extracted from Luo Han Guo fruit, including mogroside V) and steviol glycosides (such as those extracted from the stevia plant, including rebaudiosides and stevioside). Sugar alcohols such as sorbitol, xylitol, and lactitol and polyols such as erythritol may also be used in combination with the inventive carbohydrate composition. In one embodiment of the invention, one or more auxiliary sweeteners is combined with the carbohydrate composition in an amount effective to render the resulting mixture substantially equivalent in perceived sweetness to a conventional sugar (such as dextrose) or to a conventional corn syrup or high fructose corn syrup.

The inventive carbohydrate composition can be used in food products in combination with resistant starch, polydextrose, or other fiber sources, to boost the fiber content of the food product, enhance physiological benefit from consumption of the product, reduce the caloric content, and/or enhance the nutritional profile of the product.

The inventive carbohydrate composition can be used in food products in combination with bulking agents, such as sugar alcohols or maltodextrins, to reduce caloric content and/or to enhance nutritional profile of the product. The inventive carbohydrate composition can also be used as a partial replacement for fat in food products.

The inventive carbohydrate composition can be used in food products as a tenderizer or texturizer, to increase crispness or snap, to improve eye appeal, and/or to improve the rheology of dough, batter, or other food compositions. The inventive carbohydrate composition can also be used in food products as a humectant, to increase product shelf life, and/or to produce a softer, moister texture. It can also be used in food products to reduce water activity or to immobilize and manage water. Additional uses of the inventive carbohydrate composition include: to replace egg wash and/or to enhance the surface sheen of a food product, to alter flour starch gelatinization temperature, to modify the texture of the product, and to enhance browning of the product.

In at least in some embodiments of the invention, the inventive carbohydrate composition has one or more of the following advantages: high solubility, which makes it relatively easy to incorporate into food compositions, such as batters and doughs; stability under elevated temperatures and/or acidic pH (some other soluble fibers, such as inulin, are not as stable), lower sweetness, clean flavor, and clear color. The properties of the inventive carbohydrate composition allow food products in which it is used to have a clean label. In some embodiments of the invention, the inventive carbohydrate composition contains about 1 to about 2.5, or about 1 to about 2, kcal per gram (on a dry solids basis), which can reduce the total calorie content of a food product in which the inventive carbohydrate composition is incorporated.

The inventive carbohydrate composition of the present invention can be used in a variety of types of food products. One type of food product in which the inventive carbohydrate composition can be very useful is bakery products (i.e., baked foods), such as cakes, brownies, cookies, cookie crisps, muffins, breads, and sweet doughs. Conventional bakery products can be relatively high in sugar and high in total carbohydrates. The use of the inventive carbohydrate composition as an ingredient in bakery products can help lower the sugar and carbohydrate levels, as well as reduce the total calories, while increasing the fiber content of the bakery product.

There are two main categories of bakery products: yeast-raised and chemically-leavened. In yeast-raised products, like donuts, sweet doughs, and breads, the inventive carbohydrate composition can be used to replace sugars, but a small amount of sugar may still be desired due to the need for a fermentation substrate for the yeast or for crust browning. The inventive carbohydrate composition in dry form could be added in a manner similar to nutritive dry sweeteners, with other dry ingredients, and would require no special handling. In syrup form, the inventive carbohydrate composition can be added with other liquids as a direct replacement for syrups or liquid sweeteners. The dough would then be processed under conditions commonly used in the baking industry including being mixed, fermented, divided, formed or extruded into loaves or shapes, proofed, and baked or fried. The product can be baked or fried using conditions similar to traditional products. Breads are commonly baked at temperatures ranging from 216 °C (420° F) to 271 °C (520° F) for 20 to 23 minutes and doughnuts can be fried at temperatures ranging from 204-213 °C (400-415° F), although other temperatures and times could also be used. High intensity sweeteners can be added to doughs as required to obtain optimum sweetness and flavor profile.

Chemically leavened products typically have more sugar and may contain have a higher level of digestion-resistant corn syrup/solids. A finished cookie can contain 30% sugar, which could be replaced, entirely or partially, with digestion-resistant corn syrup/solids. These products could have a pH of 4-9.5, for example. The moisture content can be between 2-40%, for example.

The inventive carbohydrate composition, in syrup or dry form, is readily incorporated and may be added to the fat at the beginning of mixing during a creaming step or in any method similar to the syrup or dry sweetener that it is being used to replace. The product may be mixed and then formed, for example by being sheeted, rotary cut, wire cut, or through another forming process. The products may then be baked under typical baking conditions, for example at 93-232 °C (200-450° F).

The inventive carbohydrate composition, in syrup or dry form, can also be used to form sugar glasses in the amorphous state, to adhere particles to baked goods, and/or used to form a film or coating which enhances the appearance of a baked good. The inventive carbohydrate compositions, like other amorphous sugars, are capable of forming glasses with heating and subsequent cooling to a temperature below their glass transition temperature.

Another type of food product in which the inventive carbohydrate composition can be used is breakfast cereal. For example, a carbohydrate composition in accordance with the present invention could be used to replace all or part of the sugar in extruded cereal pieces and/or in the coating on the outside of those pieces. The coating is typically 30-60% of the total weight of the finished cereal piece.-A syrup of the inventive carbohydrate composition can be applied in a spray or drizzled on, for example. The formula for the coating can be as simple as a 50 to 75% aqueous solution of the inventive carbohydrate composition. The inventive carbohydrate composition could also be blended with sugar at various percentages, or with other sweeteners or polyols. Any extra moisture (if the inventive carbohydrate composition is supplied in syrup form) could then be evaporated in a low heat oven. In an extruded piece, the inventive carbohydrate composition in solid (dry) form could be added directly with the other dry ingredients, or the syrup form could be metered into the extruder with water or separately. A small amount of water could be added in the extruder, and then it could pass through various zones ranging from 38 °C (100° F) to 149 °C (300° F). Optionally, other sources of fiber such as resistant starch can be used in the extruded piece. Using certain carbohydrate compositions in accordance with the invention may create a different texture than other fiber sources. Using the inventive carbohydrate composition alone or in combination with other fibers may alter the texture to create product diversity.

Another type of food product in which the inventive carbohydrate composition can be used is dairy products. Examples of dairy products in which it can be used include yogurt, yogurt drinks, milk drinks, flavored milks, smoothies, ice cream, shakes, cottage cheese, cottage cheese dressing, and dairy desserts, such as quarg and the whipped mousse-type products. This would include dairy products that are intended to be consumed directly (e.g., packaged smoothies) as well as those that are intended to be blended with other ingredients (e.g., blended smoothie). It can be used in pasteurized dairy products, such as ones that are pasteurized at a temperature from 71 °C (160°F) to 141°C (285° F). Complete replacement of sugars in a dairy product is possible (which would be up to 24% of the total formula). The inventive carbohydrate composition is generally stable at acid pH values (the pH range of dairy beverages typically may be 2-8).

Another type of food product in which the inventive carbohydrate composition can be used is confections. Examples of confections in which it can be used include hard candies, fondants, nougats and marshmallows, gelatin jelly candies or gummies, jellies, chocolate, licorice, chewing gum, caramels and toffees, chews, mints, tableted confections, and fruit snacks. In fruit snacks, the inventive carbohydrate composition could be used in combination with fruit juice. The fruit juice would provide the majority of the sweetness, and the inventive carbohydrate composition would reduce the total sugar content and add fiber. The inventive carbohydrate composition can be added to the initial candy slurry and heated to the finished solids content. The slurry could be heated from 93-152 °C (200-305° F) to achieve the finished solids content. Acid could be added before or after heating to give a finished pH of 2-7. The inventive carbohydrate composition could be used as a replacement for 0-100% of the sugar and 1-100% of the corn syrup or other sweeteners present.

Another type of food product in which the inventive carbohydrate composition can be used is jams and jellies. Jams and jellies are made from fruit. A jam contains fruit pieces, while jelly is made from fruit juice. The inventive carbohydrate composition can be used in place of sugar or other sweeteners as follows: Weigh fruit and juice into a tank. Premix sugar, inventive carbohydrate composition and pectin. Add the dry composition to the liquid and cook to a temperature of 101-104 °C (214-220° F). Hot fill into jars and retort for 5-30 minutes.

Another type of food product in which the inventive carbohydrate composition can be used is beverages. Examples of beverages in which it can be used include carbonated beverages, fruit juices, concentrated juice mixes (e.g., margarita mix), clear waters, and beverage dry mixes. The use of the carbohydrate composition of the present invention would in many cases overcome the clarity problems that result when other types of fiber are added to beverages. A complete replacement of sugars is possible (which could be, for example, up to 12% of the total formula). Because of the stability of the inventive carbohydrate composition at acid pHs, it could be used in beverages having pH ranging from 2-7, for example. The inventive carbohydrate composition could be used in cold processed beverages and in pasteurized beverages.

Another type of food product in which the inventive carbohydrate composition can be used is high solids fillings. Examples of high solids fillings in which it can be used include fillings in snack bars, toaster pastries, donuts, and cookies. The high solids filling could be an acid/fruit filling or a savory filling, for example. It could be added to products that would be consumed as is, or products that would undergo further processing, by a food processor (additional baking) or by a consumer (bake stable filling). In some embodiments of the invention, the high solids fillings would have a solids concentration between 67-90%. The solids could be entirely replaced with the inventive carbohydrate composition, or it could be used for a partial replacement of the other sweetener solids present (e.g., replacement of current solids from 5-100%). Typically fruit fillings would have a pH of 2-6, while savory fillings would be between 4-8 pH. Fillings could be prepared cold, or heated at up to 121 °C (250° F) to evaporate to the desired finished solids content.

Another type of food product in which the inventive carbohydrate composition can be used is extruded and sheeted snacks. Examples of extruded and sheeted snacks in which it can be used include puffed snacks, crackers, tortilla chips, and corn chips. In preparing an extruded piece, the inventive carbohydrate composition would be added directly (as dry solids or a syrup, for example) with the dry products. A small amount of water would be added in the extruder, and then it would pass through various zones ranging from 38 °C (100° F) to 149 °C (300° F). The inventive carbohydrate composition could be added at levels from 0-50% of the dry products mixture. A syrup containing the inventive carbohydrate composition could also be added at one of the liquid ports along the extruder. The product may come out at either a low moisture content (5%) and then baked to remove the excess moisture, or at a slightly higher moisture content (10%) and then fried to remove moisture and cook out the product. Baking could be at temperatures up to 260 °C (500° F) for 20 minutes. Baking would more typically be at 177 °C (350° F) for 10 minutes. Frying would typically be at 177 °C (350° F) for 2-5 minutes. In a sheeted snack, the inventive carbohydrate composition could be used in dry form as a partial replacement of the other dry ingredients (e.g., flour). It could be from 0-50% of the dry weight. The product would be dry mixed, and then water added to form cohesive dough. The product mix could have a pH from 5 to 8. The dough would then be sheeted and cut and then baked or fried. Baking could be at temperatures up to 260 °C (500° F) for 20 minutes. Frying would typically be at 177 °C (350° F) for 2-5 minutes. Another potential benefit from the use of the inventive carbohydrate composition is a reduction of the fat content of fried snacks by as much as 15% when it is added as an internal ingredient or as a coating on the outside of a fried food.

Another type of food product in which the inventive carbohydrate composition can be used is gelatin desserts. The ingredients for gelatin desserts are often sold as a dry mix with gelatin as a gelling agent. The sugar solids could be replaced partially or entirely with inventive carbohydrate composition solids in the dry mix. The dry mix can then be mixed with water and heated to 100 °C (212° F) to dissolve the gelatin and then more water and/or fruit can be added to complete the gelatin dessert. The gelatin is then allowed to cool and set. Gelatin can also be sold in shelf stable packs. In that case the stabilizer is usually carrageenan-based. As stated above, the inventive carbohydrate composition can replace up to 100% of the other sweetener solids. The dry ingredients are mixed into the liquids and then pasteurized and put into cups and allowed to cool and set. The cups usually have a foil top.

Another type of food product in which the inventive carbohydrate composition can be used is snack bars. Examples of snack bars in which it can be used include breakfast and meal replacement bars, nutrition bars, granola bars, protein bars, and cereal bars. It could be used in any part of the snack bars, such as in the high solids filling, the binding syrup or the particulate portion. A complete or partial replacement of sugar in the binding syrup is possible with the inventive carbohydrate composition. The binding syrup is typically from 50-90% solids and applied at a ratio ranging from 10% binding syrup to 90% particulates, to 70% binding syrup to 30% particulates. The binding syrup is made by heating a solution of sweeteners, bulking agents and other binders (like starch) to 71-110 °C (160-230° F) (depending on the finished solids needed in the syrup). The syrup is then mixed with the particulates to coat the particulates, providing a coating throughout the matrix. The inventive carbohydrate composition could also be used in the particulates themselves. This could be an extruded piece, directly expanded or gun puffed. It could be used in combination with another grain ingredient, corn meal, rice flour or other similar ingredient.

Another type of food product in which the inventive carbohydrate composition can be used is cheese, cheese sauces, and other cheese products. Examples of cheese, cheese sauces, and other cheese products in which it can be used include lower milk solids cheese, lower fat cheese, and calorie reduced cheese. In block cheese, it can help to improve the melting characteristics, or to decrease the effect of the melt limitation added by other ingredients such as starch. It could also be used in cheese sauces, for example as a bulking agent, to replace fat, milk solids, or other typical bulking agents.

Another type of food product in which the inventive carbohydrate composition can be used is films that are edible and/or water soluble. Examples of films in which it can be used include films that are used to enclose dry mixes for a variety of foods and beverages that are intended to be dissolved in water, or films that are used to deliver color or flavors such as a spice film that is added to a food after cooking while still hot. Other film applications include, but are not limited to, fruit and vegetable leathers, and other flexible films.

Another type of food product in which the inventive carbohydrate composition can be used is soups, syrups, sauces, and dressings. A typical dressing could be from 0-50% oil, with a pH range of 2-7. It could be cold processed or heat processed. It would be mixed, and then stabilizer would be added. The inventive carbohydrate composition could easily be added in liquid or dry form with the other ingredients as needed. The dressing composition may need to be heated to activate the stabilizer. Typical heating conditions would be from 77-93 °C (170-200° F) for 1-30 minutes. After cooling, the oil is added to make a pre-emulsion. The product is then emulsified using a homogenizer, colloid mill, or other high shear process.

Sauces can have from 0-10% oil and from 10-50% total solids, and can have a pH from 2-8. Sauces can be cold processed or heat processed. The ingredients are mixed and then heat processed. The inventive carbohydrate composition could easily be added in liquid or dry form with the other ingredients as needed. Typical heating would be from 77-93 °C (170-200° F) for 1-30 minutes.

Soups are more typically 20-50% solids and in a more neutral pH range (4-8). They can be a dry mix, to which the inventive carbohydrate composition in dry solid form could be added, or a liquid soup which is canned and then retorted. In soups, the inventive carbohydrate composition could be used up to 50% solids, though a more typical usage would be to deliver 5 g of fiber/serving.

Syrups can incorporate the inventive carbohydrate composition as up to a 100% replacement of the sugar solids. Typically that would be 12-20% of the syrup on an as-is basis. The inventive carbohydrate composition would be added with the water and then pasteurized and hot filled to make the product safe and shelf stable (typically 85 °C (185° F) for one minute pasteurization).

Another type of food product in which the inventive carbohydrate composition can be used is coffee creamers. Examples of coffee creamers in which it can be used include both liquid and dry creamers. A dry blended coffee creamer can be blended with commercial creamer powders of the following fat types: soybean, coconut, palm, sunflower, or canola oil, or butterfat. These fats can be non-hydrogenated or hydrogenated. The inventive carbohydrate composition can be added in dry form as a fiber source, optionally together with fructo-oligosaccharides, polydextrose, inulin, maltodextrin, resistant starch, sucrose, and/or conventional corn syrup solids. The composition can also contain high intensity sweeteners, such as sucralose, acesulfame potassium, aspartame, or combinations thereof. These ingredients can be dry blended to produce the desired composition.

A spray dried creamer powder is a combination of fat, protein and carbohydrates, emulsifiers, emulsifying salts, sweeteners, and anti-caking agents. The fat source can be one or more of soybean, coconut, palm, sunflower, or canola oil, or butterfat. The protein can be sodium or calcium caseinates, milk proteins, whey proteins, wheat proteins, or soy proteins. The carbohydrate can be the inventive carbohydrate composition alone or in combination with fructo-oligosaccharides, polydextrose, inulin, resistant starch, maltodextrin, sucrose, or corn syrup. The emulsifiers can be mono- and diglycerides, acetylated mono- and diglycerides, or propylene glycol monoesters. The salts can be trisodium citrate, monosodium phosphate, disodium phosphate, trisodium phosphate, tetrasodium pyrophosphate, monopotassium phosphate, and/or dipotassium phosphate. The composition can also contain high intensity sweeteners, such as sucralose, acesulfame potassium, aspartame, or combinations thereof. Suitable anti-caking agents include sodium silicoaluminates or silica dioxides. The products are combined in slurry, optionally homogenized, and spray dried in either a granular or agglomerated form.

Liquid coffee creamers are simply a homogenized and pasteurized emulsion of fat (either dairy fat or hydrogenated vegetable oil), some milk solids or caseinates, corn syrup, and vanilla or other flavors, as well as a stabilizing blend. The product is usually pasteurized via HTST (high temperature short time) at 85 °C (185° F) for 30 seconds, or UHT (ultra-high temperature), at 141 °C (285° F) for 4 seconds, and homogenized in a two stage homogenizer at 500-3000 psi first stage, and 200-1000 psi second stage. The coffee creamer is usually stabilized so that it does hot break down when added to the coffee.

Another type of food product in which the inventive carbohydrate composition can be used is food coatings such as icings, frostings, and glazes. In icings and frostings, the inventive carbohydrate composition can be used as a sweetener replacement (complete or partial) to lower caloric content and increase fiber content. Glazes are typically about 70-90% by weight sugar, with most of the rest being water, and the inventive carbohydrate composition can be used to entirely or partially replace the sugar. Frosting typically contains about 2-40% by weight of a liquid/solid fat combination, about 20-75% by weight sweetener solids, color, flavor, and water. The inventive carbohydrate composition can be used to replace all or part of the sweetener solids, or as a bulking agent in lower fat systems.

Another type of food product in which the inventive carbohydrate composition can be used is pet food, such as dry or moist dog food. Pet foods are made in a variety of ways, such as extrusion, forming, and formulating as gravies. The inventive carbohydrate composition could be used at levels of 0-50% by weight in each of these types.

Another type of food product in which the inventive carbohydrate composition can be used is tortillas, which usually contain flour and/or corn meal, fat, water, salt, and fumaric acid. The inventive carbohydrate composition could be used to replace flour or fat. The ingredients are mixed and then sheeted or stamped and cooked. This addition could be used to add fiber or extend the shelf life.

Another type of food product in which the inventive carbohydrate composition can be used is fish and meat. Conventional corn syrup is already used in some meats, so the inventive carbohydrate composition can be used as a partial or complete substitute. For example, the inventive carbohydrate composition could be added to brine before it is vacuum tumbled or injected into the meat. It could be added with salt and phosphates, and optionally with water binding ingredients such as starch, carrageenan, or soy proteins. This would be used to add fiber, a typical level would be 5 g/serving which would allow a claim of excellent source of fiber.

Another type of food product in which the inventive carbohydrate composition can be used is dried (infused) fruit. Many kinds of dried fruit are only stable and palatable if they are infused with sugar. The inventive carbohydrate composition can be substituted for all or part of the sugar. For example, the inventive carbohydrate composition could be added to the brine used to infuse the fruit before drying. Stabilizing agents such as sulfates can be used in this brine as well.

Another type of food product in which the inventive carbohydrate composition can be used is infant and toddler food. The inventive carbohydrate composition could be used as a replacement or a supplement to one or more conventional ingredients for such food. Because of its mild flavor and clear color, it could be added to a variety of baby foods to reduce sugar and increase fiber content.

Another type of food product in which the inventive carbohydrate composition can be used is batters and breadings, such as the batters and breadings for meat. This could be done by replacing all or part of the dry components of the batter and/or breading (e.g., flour type ingredients) with the inventive carbohydrate composition, or to use in combination with addition to the meat muscle or fried food itself. This could be used as a bulking agent, for fiber addition, or to reduce fat in the fried food.

Food products comprising the carbohydrate compostion of the present invention can also be used to help control the blood glucose concentration in mammals, such as humans, that suffer from diabetes. When the food product is consumed by the mammal, the slowly digestible and/or digestion resistant components in the food product can cause a more moderate relative glycemic response in the bloodstream, which can be beneficial for diabetes patients. "Control" in this context should be understood as a relative term; i.e., the glycemic response can be improved relative to that occurring when the same mammal consumes a similar food product that does not contain a carbohydrate composition in accordance with the, although the glycemic response may not necessarily be equivalent to what would be observed in a mammal that does not suffer from diabetes.

Certain embodiments of the invention can be further understood from the following examples.

### Examples

### Example 1

This example demonstrates the preparation of carbohydrate compositions which contain moderately high levels of dietary fiber and which are not in accordance with the present invention.

Sweetose® 4300 corn syrup (81% dry solids) was evaporated to less than 6% moisture content by passing it through a hot oil jacketed paddle mixer at a rate of 77 kg/h. The paddle mixer rotor speed was typically set for 300 to 600 rpm and the oil jacket temperature was varied from 150°C to 205°C. In some of the tests phosphoric acid was added at a rate to give from 0.1% to 0.4% phosphoric acid solids on corn syrup solids. In some of the tests hydrochloric acid was added at 25 ppm, in place of or in addition to the phosphoric acid.

The amount of fiber in the carbohydrate compositions thus obtained was measured using the following procedure. A 25 mg sample of the carbohydrate composition was dissolved in 4 mL of pH 4.0 buffer and incubated with 100 microliters of a 10 mg/mL amyloglucosidase enzyme (Amyloglucoxidase Sigma Catalog #A-7255) solution for 2 hours at 45°C. An aliquot from this incubation was treated with a small quantity of ion exchange resin and filtered (0.45 microns) prior to saccharide distribution analysis by liquid chromatography. From this analysis, the weight percent of carbohydrate found to exist as trisaccharides and higher was quantified as digestion resistant carbohydrate and is labeled as % fiber in Table 1.

**Table 1.**

| **Sample name** | **Temp °C** | **%H₃PO₄** | **HCl ppm** | **%fiber** |
|---|---|---|---|---|
| run 1 | 194 | 0.2% | | 43 |
| run 2 | 195 | 0.2% | 25 | 52 |
| run 3 | 193 | 0.4% | 25 | 62 |
| run 4 | 203 | 0.4% | 25 | 68 |
| run 5 | 180 | 0.2% | | 27 |
| run 6 | 181 | 0.4% | | 37 |
| run 7 | 181 | 0.4% | 25 | 33 |
| polydextrose control | | | | 82 |

A laboratory sample of polydextrose was used as a control for this test, and showed a level of approximately 82% fiber.

### Example 2

This example further demonstrates the preparation of carbohydrate compositions which contain moderately high levels of dietary fiber and which are not in accordance with the present invention.

Sweetose® 4300 corn syrup (81% ds) was evaporated to less than 3% moisture content by passing it through a hot oil jacketed paddle mixer at a rate of 77 kg/h. The paddle mixer rotor speed was typically set for 800 rpm and the oil jacket temperature was set to 210°C. In some of the tests phosphoric acid was added at a rate to give from 0.1% to 0.4% phosphoric acid solids on corn syrup solids. In some of the tests hydrochloric acid was added at 25 or 50 ppm, in place of or in addition to the phosphoric acid.

The amount of fiber in the carbohydrate compositions thus obtained was measured using the following procedure. A 25 mg sample of the carbohydrate composition was dissolved in 4 mL of pH 4.0 buffer and incubated with 100 microliters of a 10 mg/mL amyloglucosidase enzyme (Amyloglucoxidase Sigma Catalog #A-7255) solution for 2 hours at 45°C. An aliquot from this incubation was treated with a small quantity of ion exchange resin and filtered (0.45 microns) prior to saccharide distribution analysis by liquid chromatography. From this analysis, the weight percent of carbohydrate found to exist as trisaccharides and higher was quantified as digestion resistant carbohydrate and is labeled as % fiber in Table 2.

**Table 2.**

| **Sample name** | **Temp °C** | **%H₃PO₄** | **HCl ppm** | **%fiber** |
|---|---|---|---|---|
| run 2-1 | 210 | 0.0% | | 11 |
| run 2-2 | 210 | 0.2% | | 79 |
| run 2-3 | 210 | 0.0% | | 12 |
| run 2-4 | 210 | 0.1% | | 43 |
| run 2-5 | 210 | 0.1% | | 51 |
| run 2-6 | 210 | 0.2% | | 61 |
| run 2-7 | 210 | 0.3% | | 84 |
| run 2-8 | 210 | 0.2% | 25 | 79 |
| run 2-9 | 210 | 0.0% | | 11 |
| run 2-10 | 210 | 0.1% | | 43 |
| run 2-11 | 210 | 0.1% | 25 | 57 |
| run 2-12 | 210 | 0.2% | | 53 |
| run 2-13 | 210 | 0.2% | 25 | 62 |
| run 2-14 | 210 | 0.4% | | 56 |
| run 2-15 | 210 | 0.4% | 25 | 55 |
| run 2-16 | 210 | 0.4% | 50 | 62 |
| run 2-17 | 210 | 0.0% | 50 | 65 |
| run 2-18 | 210 | 0.0% | 50 | 59 |
| polydextrose control | | | | 82 |

A laboratory sample of polydextrose was used as a control for this test, and showed a level of approximately 82% fiber.

### Example 3

This example demonstrates the preparation of carbohydrate compositions in accordance with the invention which have a relatively low sugar content and a relatively high fiber content.

A 50 % ds w/w solution was made by adding water to the starting syrup (Table 3), which was prepared using procedures generally in accordance with those described in Examples 1 and 2.

**Table 3. Composition of the starting syrup**

| **DP1** | **DP2** | **DP3** | **DP4+** | **Other Saccharides** | **% TDF** |
|---|---|---|---|---|---|
| 5.7 | 8.7 | 8.5 | 73.1 | 4.0 | 76.7 |

Sequential Simulated Moving Bed (SSMB) chromatography was used to decrease the sugar content and increase the fiber content of the starting syrup. Part of the starting syrup solution was transferred to a SSMB feed tank. The SSMB chromatography system was loaded with Dow 99 - 320 cation resin in the potassium form. The diluted feed was supplied to the SSMB chromatography system at 60 - 70°C with an average flow rate of 90 ml/min. Desorbent water (RO water) was added at a water/feed ratio of 2.0 to 4.0

Table 4 shows results for varying water to feed ratios (D/F) and Table 5 shows results different SSMB setups and average flow rates on total dietary fiber (TDF) of the product.

**Table 4.**

| **D/F ratio** | **DP1** | **DP2** | **DP3** | **DP4+** | **Other Saccharides** | **% TDF** |
|---|---|---|---|---|---|---|
| 2.0 | 1.54 | 2.8 | 7.3 | 84.7 | 3.6 | 87.5 |
| 2.7 | 0.3 | 1.4 | 11.3 | 85.0 | 2.0 | 88.7 |
| 3.2 | 0.8 | 1.8 | 12.8 | 83.7 | 1.0 | 88.6 |

**Table 5.**

| **SSMB Setup** | **Average flow rate ml/min** | **Desorbent/feed water ratio** | **% TDF** |
|---|---|---|---|
| 1 | 12 | 4.5 | 93.30 |
| 2 | 14 | 4.5 | 93.50 |
| 3 | 16 | 4.5 | 93.30 |
| 4 | 18 | 4.5 | 92.00 |
| 5 | 18 | 4.0 | 92.20 |
| 6 | 18 | 3.6 | 92.50 |
| 7 | 18 | 3.2 | 92.00 |
| 8 | 18 | 2.8 | 92.00 |
| 9 | 18 | 2.5 | 91.60 |
| 10 | 12 | 3.2 | 86.00 |
| 11 | 12 | 3.2 | 89.10 |
| 12 | 18 | 3.2 | 88.40 |
| 13 | 18 | 3.2 | 87.90 |
| 14 | 18 | 2.6 | 85.40 |
| 15 | 18 | 2.9 | 86.10 |

## Claims

1. A carbohydrate composition comprising linear and non-linear saccharide oligomers, wherein:
a) the composition has a higher concentration of non-linear saccharide oligomers than linear saccharide oligomers;
b) at least about 85 % by weight of the non-linear saccharide oligomers have a degree of polymerization of at least 3;
c) the composition contains a total of less than 5% by weight on a dry solids basis of mono- and disaccharides;
d) the composition has a caloric content of from about 1 to about 2.5 kcal/g; and
e) the composition has a dietary fiber content, as measured by AOAC method 2001.03, of from about 80% to about 95%.

2. The carbohydrate composition of claim 1, wherein the carbohydrate composition is in syrup form.

3. The carbohydrate composition of claim 1 or 2, wherein the carbohydrate composition contains about 60% to about 85% by weight solids.

4. The carbohydrate composition of any of claims 1 to 3, wherein at least about 90 % by weight of the non-linear saccharide oligomers have a degree of polymerization of at least 3.

5. The carbohydrate composition of any of claims 1 to 4, wherein the carbohydrate composition has a caloric content of from about 1 to about 2 kcal/g.

6. The carbohydrate composition of any of claims 1-5, wherein the carbohydrate composition is prepared by a using as a starting material a syrup made by hydrolysis of starch.

7. The carbohydrate composition of claim 6, wherein the carbohydrate composition is prepared by using as a starting material a dextrose green syrup, another dextrose syrup, a corn syrup or a solution of maltodextrin.

8. The carbohydrate composition of any of claims 1-7, wherein the carbohydrate composition is prepared by a process comprising heating a syrup made by hydrolysis of starch at a solids concentration of at least 70% by weight and contacting it with a least one catalyst that accelerates the rate of cleavage or formation of glucosyl bonds for a time sufficient to cause formation of non-linear saccharide oligomers.

9. A syrup comprising the carbohydrate composition of any of claims 1 to 5 and an amount of at least one high intensity sweetener effective to impart a level of sweetness to the syrup comparable to that of a standard corn syrup or high fructose corn syrup.

10. A syrup comprising the carbohydrate composition of any of claims 1 to 5 and at least one natural sweetener.

11. The syrup of claim 10, wherein the at least one natural sweetener is selected from the group consisting of steviol glycosides and mogrosides.

12. A syrup comprising the carbohydrate composition of any of claims 1 to 5 and at least one polyol.

## Patentansprüche

1. Kohlenhydratzusammensetzung, welche lineare und nichtlineare Saccharid-Oligomere umfasst, wobei:
a) die Zusammensetzung eine höhere Konzentration an nichtlinearen Saccharid-Oligomeren als an linearen Saccharid-Oligomeren aufweist;
b) mindestens etwa 85 Gew.-% der nichtlinearen Saccharid-Oligomere einen Polymerisationsgrad von mindestens 3 aufweisen;
c) die Zusammensetzung insgesamt weniger als 5 Gew.-% auf einer Trockenfeststoffbasis an Mono- und Disacchariden enthält;
d) die Zusammensetzung einen Kaloriengehalt von etwa 1 bis etwa 2,5 kcal/g aufweist; und
e) die Zusammensetzung einen Ballaststoffgehalt, gemessen nach der AOAC-Methode 2001.03, von etwa 80% bis etwa 95% aufweist.

2. Kohlenhydratzusammensetzung nach Anspruch 1, wobei die Kohlenhydratzusammensetzung in Form eines Sirups vorliegt.

3. Kohlenhydratzusammensetzung nach Anspruch 1 oder 2, wobei die Kohlenhydratzusammensetzung etwa 60 bis etwa 85 Gew.-% Feststoffe enthält.

4. Kohlenhydratzusammensetzung nach einem der Ansprüche 1 bis 3, wobei mindestens etwa 90 Gew.-% der nichtlinearen Saccharid-Oligomere einen Polymerisationsgrad von mindestens 3 aufweisen.

5. Kohlenhydratzusammensetzung nach einem der Ansprüche 1 bis 4, wobei die Kohlenhydratzusammensetzung einen Kaloriengehalt von etwa 1 bis etwa 2 kcal/g aufweist.

6. Kohlenhydratzusammensetzung nach einem der Ansprüche 1 bis 5 wobei die Kohlenhydratzusammensetzung unter Verwendung eines durch Stärkehydrolyse erzeugten Sirups als Ausgangsmaterial hergestellt wird.

7. Kohlenhydratzusammensetzung nach Anspruch 6, wobei die Kohlenhydratzusammensetzung unter Verwendung eines Dextrose Grünsirups, eines anderen Dextrosesirups, eines Maissirups oder einer Maltodextrin-Lösung als Ausgangsmaterial hergestellt wird.

8. Kohlenhydratzusammensetzung nach einem der Ansprüche 1 bis 7, wobei die Kohlenhydratzusammensetzung hergestellt wird durch ein Verfahren, umfassend das Erhitzen eines Sirups, erzeugt durch Stärkehydrolyse bei einer Feststoffkonzentration von mindestens 70 Gew.-% und das Kontaktieren der Letzteren mit mindestens einem Katalysator, der die Teilungsrate oder die Bildung von Glukosylbindungen beschleunigt, für eine Dauer die ausreichend ist, um die Bildung von nichtlinearen Saccharid-Oligomeren zu bewirken.

9. Sirup umfassend die Kohlenhydratzusammensetzung nach einem der Ansprüche 1 bis 5 und eine Menge an mindestens einem Hochintensitätssüßstoff, der dazu in der Lage ist, dem Sirup einen Grad an Süsse zu verleihen, der vergleichbar mit dem eines normalen Maissirups oder eines Maissirups mit hohem Fruktosegehalt ist.

10. Sirup umfassend die Kohlenhydratzusammensetzung nach einem der Ansprüche 1 bis 5 und mindestens einen natürlichen Süssstoff.

11. Sirup nach Anspruch 10, wobei der mindestens eine natürliche Süssstoff ausgewählt ist aus der Gruppe bestehend aus Steviolglucosiden und Mogrosiden.

12. Sirup umfassend die Kohlenhydratzusammensetzung nach einem der Ansprüche 1 bis 5 und mindestens ein Polyol.

## Revendications

1. Composition d'hydrate de carbone comprenant des oligomères saccharides linéaires et non linéaires, dans laquelle :
a) la composition présente une concentration plus haute en oligomères saccharides non linéaires qu'en oligomères saccharides linéaires ;
b) au moins environ 85% en poids des oligomères saccharides non linéaires ont un degré de polymérisation d'au moins 3 ;
c) la composition contient un total inférieur à 5% en poids de mono et disaccharides sur une base de solides secs ;
d) la composition a une teneur en calories d'environ 1 à environ 2,5 kcal/g ; et
e) la composition a une teneur en fibres alimentaires, selon la méthode de mesure AOAC 2001.03, d'environ 80% à environ 95%.

2. Composition d'hydrate de carbone selon la revendication 1, dans laquelle la composition d'hydrate de carbone se présente sous la forme d'un sirop.

3. Composition d'hydrate de carbone selon les revendications 1 ou 2, dans laquelle la composition d'hydrate de carbone contient d'environ 60% à environ 85% en poids de solides.

4. Composition d'hydrate de carbone selon l'une des revendications 1 à 3, dans laquelle au moins 90% en poids des oligomères saccharides non linéaires ont un degré de polymérisation d'au moins 3.

5. Composition d'hydrate de carbone selon l'une des revendications 1 à 4, dans laquelle la composition d'hydrate de carbone a une teneur en calories d'environ 1 à environ 2 kcal/g.

6. Composition d'hydrate de carbone selon l'une quelconque des revendications 1 à 5, dans laquelle la composition d'hydrate de carbone est préparée en utilisant comme matériau de départ un sirop fabriqué par hydrolyse d'amidon.

7. Composition d'hydrate de carbone selon la revendication 6, dans laquelle la composition d'hydrate de carbone est préparée en utilisant comme matériau de départ un sirop vert de dextrose, un autre sirop de dextrose, un sirop de maïs ou une solution de maltodextrine.

8. Composition d'hydrate de carbone selon l'une des revendications 1 à 7, dans laquelle la composition d'hydrate de carbone est préparée par un procédé comprenant la chauffe d'un sirop fabriqué par hydrolyse d'amidon à une concentration de solides d'au moins 70% en poids et sa mise en contact avec au moins un catalysateur qui accélère le taux de clivage ou la formation de liaisons glucosyle durant une période suffisante pour causer la formation d'oligomères saccharide non linéaires.

9. Sirop comprenant la composition d'hydrate de carbone selon l'une des revendications 1 à 5 et une quantité d'au moins un édulcorant à haute intensité capable de doter le sirop d'un degré de sucrosité comparable à celui d'un sirop de maïs standard ou d'un sirop de maïs à fructose élevé.

10. Sirop comprenant la composition d'hydrate de carbone selon l'une des revendications 1 à 5 et au moins un édulcorant naturel.

11. Sirop selon la revendication 10, dans lequel le au moins un édulcorant naturel est sélectionné à partir du groupe constitué des glucosides de stéviol et des mogrosides.

12. Sirop comprenant la composition d'hydrate de carbone selon l'une des revendications 1 à 5 et au moins un polyol.
